# EUROPEAN PATENT SPECIFICATION

(11) **EP 4 501 731 B1**
(45) Date of publication and mention of the grant of the patent: **08.04.2026**
(21) Application number: 22935207.5
(22) Date of filing: 30.03.2022
(51) Int. Cl.: B60W 40/02, B60W 40/105, B60W 30/14, G05D 1/243, G05D 1/617, G05D 1/65, G05D 105/22, G05D 107/13, G05D 107/17, G05D 109/10, G05D 111/10

(54) **DEVICE FOR CONTROLLING MOBILE BODY, METHOD FOR CONTROLLING MOBILE BODY, AND STORAGE MEDIUM**
VORRICHTUNG ZUR STEUERUNG EINES MOBILEN KÖRPERS, VERFAHREN ZUR STEUERUNG EINES MOBILEN KÖRPERS UND SPEICHERMEDIUM
DISPOSITIF DE COMMANDE D'UN CORPS MOBILE, PROCÉDÉ DE COMMANDE D'UN CORPS MOBILE ET SUPPORT D'ENREGISTREMENT

(43) Date of publication of application: 05.02.2025
(73) Proprietor: HONDA MOTOR CO., LTD., Tokyo 105-8404 (JP)
(72) Inventor: AIZAWA, Koki, Wako-shi, Saitama 351-0193 (JP); KURAMITSU, Yunosuke, Wako-shi, Saitama 351-0193 (JP); SHIRAKATA, Kento, Wako-shi, Saitama 351-0193 (JP); WAKAYAMA, Ryoji, Wako-shi, Saitama 351-0193 (JP); MATSUNAGA, Hideki, Wako-shi, Saitama 351-0193 (JP); MATSUMOTO, Takashi, Wako-shi, Saitama 351-0193 (JP)
(74) Representative: Weickmann & Weickmann PartmbB
(86) International application number: PCT/JP2022/015796
(87) International publication number: WO 2023/188060

(56) References cited:
- EP-B1- 2 969 634
- WO-A1-2021/230236
- JP-A- 2011 016 615
- JP-A- 2017 100 490
- JP-A- 2017 100 490
- JP-A- H03 155 859
- US-A1- 2013 226 431

## Description

### [Technical Field]

The present invention relates to a device for controlling a mobile object, a method for controlling a mobile object, and a storage medium.

### [Background Art]

In the related art, practical application of a mobile object capable of moving on both a sidewalk and a roadway is progressing. In connection therewith, a technology for detecting a direction in which an electric vehicle can move from an image of a block for guiding visually impaired people, which is included in image data captured by an imager, and controlling traveling of the electric vehicle on the basis of the detected direction is known (for example, see Patent Document 1).

Each of US 2013/226431 A1, EP 2 969 634 B1 and JP 2017 100490 A teaches a device for controlling a mobile object having the features of the preamble of claim 1.

### [Citation List]

### [Patent Document]

[Patent Document 1]
Japanese Unexamined Patent Application, First Publication No. 2019-197328

### [Summary of Invention]

### [Technical Problem]

Incidentally, in a mobile object capable of moving on both a sidewalk and a roadway, it is necessary to set different upper limit speeds for the sidewalk and the roadway, but since the roadway is cut off, a speed is switched frequently when the mobile object only travels by a short distance and then travels on the next sidewalk immediately, which is likely to put a burden on a vehicle or passengers. However, in the related art, travel control in an above-described situation is not considered, and there are cases where appropriate travel control cannot be performed depending on a road situation.

The present invention has been made in consideration of the above circumstances, and an object of the present invention is to provide a device for controlling a mobile object, a method for controlling the mobile object, and a storage medium capable of causing a mobile object to travel in a more appropriate traveling state depending on a surrounding road situation.

### [Solution to Problem]

According to the present invention a device for controlling a mobile object, a method for controlling a mobile object, and a storage medium has the features of claims 1, 10 and 11 respectively. Optional features of the invention are set forth in claims 2 through 9.

### [Advantageous Effects of Invention]

According to the invention, it is possible to cause the mobile object to travel in a more appropriate traveling state depending on a surrounding road situation.

### [Brief Description of Drawings]

FIG. 1 is a diagram showing an example of a configuration of a mobile object 1 and a control device 100 according to an embodiment.
FIG. 2 is a perspective view of the mobile object 1 seen from above.
FIG. 3 is a diagram illustrating a first switching pattern of a traveling state of the mobile object 1.
FIG. 4 is a diagram showing an example in which switching from the second traveling state to the first traveling state is performed.
FIG. 5 is a diagram illustrating a second switching pattern of the traveling state of the mobile object 1.
FIG. 6 is a flowchart showing an example of a flow of processing that is executed by control device 100 of the embodiment.

### [Description of Embodiments]

Hereinafter, embodiments of a device for controlling a mobile object, a method for controlling a mobile object, and a storage medium of the present invention will be described with reference to the drawings. The mobile object moves both on a roadway and in a predetermined area different from the roadway. The mobile object is sometimes referred to as micromobility. An electric scooter is a type of micromobility. The predetermined area is, for example, a sidewalk. Further, the predetermined area may be some or all of a roadside strip, a bicycle lane, public open space, or the like, or may include all of a sidewalk, a roadside strip, a bicycle lane, a public open space, or the like. In the following description, it is assumed that the predetermined area is a sidewalk. In the following description, a portion described as "sidewalk" can be appropriately read as a "predetermined area".

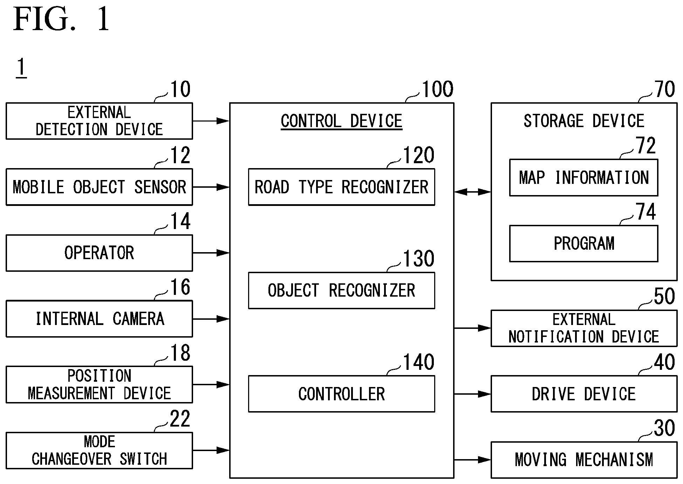

FIG. 1 is a diagram showing an example of a configuration of a mobile object 1 and a control device 100 according to an embodiment. For example, an external detection device 10, a mobile object sensor 12, an operator 14, an internal camera 16, a position measurement device 18, a mode changeover switch 22, a moving mechanism 30, a drive device 40, an external notification device 50, a storage device 70, and a control device 100 are mounted on the mobile object 1. Some of these configurations that are not essential for realization of a function of the present invention may be omitted. The mode changeover switch 22 is an example of a "switching receiver".

The external detection device 10 is a variety of devices whose detection range is in a traveling direction of the mobile object 1. The external detection device 10 includes an external camera, a radar device, a light detection and ranging (LIDAR), a sensor fusion device, and the like. The external detection device 10 detects an external situation of the mobile object 1. Further, the external detection device 10 outputs information indicating a detection result (image, position of an object, or the like) to the control device 100.

The mobile object sensor 12 includes, for example, a speed sensor, an acceleration sensor, a yaw rate (angular velocity) sensor, an azimuth sensor, and an operation amount detection sensor attached to the operator 14.

The operator 14 receives a driving operation by a passenger of the mobile object. Examples of the operator 14 include an operator for instructing acceleration or deceleration (for example, an accelerator pedal, a brake pedal, or a dial switch or a lever for speed adjustment), and an operator for instructing steering (for example, a steering wheel). In this case, the mobile object sensor 12 may include an accelerator opening sensor, a brake depression amount sensor, a steering torque sensor, and the like. The mobile object 1 may include, as the operator 14, an operator in an aspect other than the above (for example, a non-circular rotary operator, a joystick, or a button).

The internal camera 16 images at least a head of the passenger in the mobile object 1 from the front. The internal camera 16 is a digital camera using an imaging device such as a charge coupled device (CCD) or a complementary metal oxide semiconductor (CMOS). The internal camera 16 outputs the captured image to the control device 100.

The position measurement device 18 is a device that measures a position of the mobile object 1. The position measurement device 18 is, for example, a global navigation satellite system (GNSS) receiver, and specifies the position of the mobile object 1 on the basis of a signal received from a GNSS satellite, and outputs the position of the mobile object 1 as position information. The position information of the mobile object 1 may be estimated from a position of a Wi-Fi base station to which a communication device mounted on the mobile object 1 is connected.

The mode changeover switch 22 is a switch that is operated by a passenger. The mode changeover switch 22 receives an instruction regarding switching of the traveling state of the mobile object 1. The mode changeover switch 22 may be a mechanical switch or may be a graphical user interface (GUI) switch set on a touch panel. The mode changeover switch 22 receives, for example, an operation for switching a driving mode to any one of mode A: an assist mode in which one of a steering operation and an acceleration or deceleration control is performed by the passenger, and the other is performed automatically, which includes mode A-1 in which the steering operation is performed by the passenger and the acceleration or deceleration control is performed automatically, and mode A-2 in which the acceleration or deceleration operation is performed by the passenger and the steering control is performed automatically, mode B: a manual driving mode in which the steering operation and the acceleration or deceleration operation are performed by the passenger, and mode C: an automatic driving mode in which operation control and acceleration or deceleration control are performed automatically. Further, the mode changeover switch 22 may receive an operation for switching the traveling state of the mobile object 1 to be described later (for example, a switching operation between the first traveling state and the second traveling state by the passenger). The above-described operation for switching the mode (or traveling state) may be received from a microphone or an internal camera provided in the mobile object 1 instead of the mode changeover switch 22. In this case, the control device 100 may receive a mode switching operation from an analysis result of vocal sound of the passenger input by the microphone, or may receive the mode switching operation from a gesture of the passenger, a motion of a mouth, or the like obtained as a result of analyzing a frontal image of the passenger captured by the internal camera.

The moving mechanism 30 is a mechanism for moving the mobile object 1 on the road. The moving mechanism 30 is, for example, a wheel group including a steering wheel and a driving wheel. Further, the moving mechanism 30 may be a leg portion for multi-legged walk.

The drive device 40 outputs a force to the moving mechanism 30 to move the mobile object 1. For example, the drive device 40 includes a motor that drives a drive wheel, a battery that stores power to be supplied to the motor, a steering device that adjusts a steering angle of the steering wheel, and the like. The drive device 40 may include an internal combustion engine, a fuel cell, or the like as a driving force output means or a power generation means. Further, the drive device 40 may further include a brake device based on a frictional force or air resistance.

The external notification device 50 is, for example, a lamp, a display device, or a speaker provided in an outer plate portion of the mobile object 1 to notify the outside of the mobile object 1 of information. The external notification device 50, for example, performs different operations depending on a difference in the traveling state of the mobile object 1 controlled by the controller 140. The traveling state includes, for example, at least a first traveling state and a second traveling state. The first traveling state is basically a traveling state in which the mobile object 1 moves on a roadway. The second traveling state is basically a traveling state in which the mobile object 1 moves on a sidewalk. In the embodiment, when a predetermined condition to be described later is satisfied, there may be an exceptional case where the vehicle travels on the roadway in the second traveling state. In the first traveling state, at least an upper limit speed of the mobile object 1 is limited to the first speed, and in the second traveling state, at least the upper limit speed of the mobile object 1 is limited to the second speed lower than the first speed.

For example, the external notification device 50 is controlled to cause the lamp to emit light when the mobile object 1 is moving on the sidewalk in the second traveling state, and cause the lamp not to emit light when the mobile object 1 is moving on the roadway in the first traveling state. A color of the light emitted from this lamp is preferably a color specified by law. Further, the external notification device 50 is controlled to cause the lamp to emit green light when the mobile object 1 is moving on the sidewalk and to cause the lamp to emit blue light when the mobile object 1 is moving on the roadway. When the external notification device 50 is the display device, the external notification device 50 displays text or graphics indicating that "the mobile object 1 is traveling on the sidewalk" when the mobile object 1 is traveling on the sidewalk. Further, when the predetermined condition is satisfied and the mobile object 1 is caused to travel on the roadway in the second traveling state, the external notification device 50 may cause the lamp to emit light in a color different from the above-described emission color, and may display text or graphics indicating the vehicle is traveling in the second traveling state on the display device.

Further, the external notification device 50 includes an audio output device such as a speaker in addition to (or in place of) an output from the lamp or the display device described above, and a sound indicating a state of the mobile object described above may be output from the speaker.

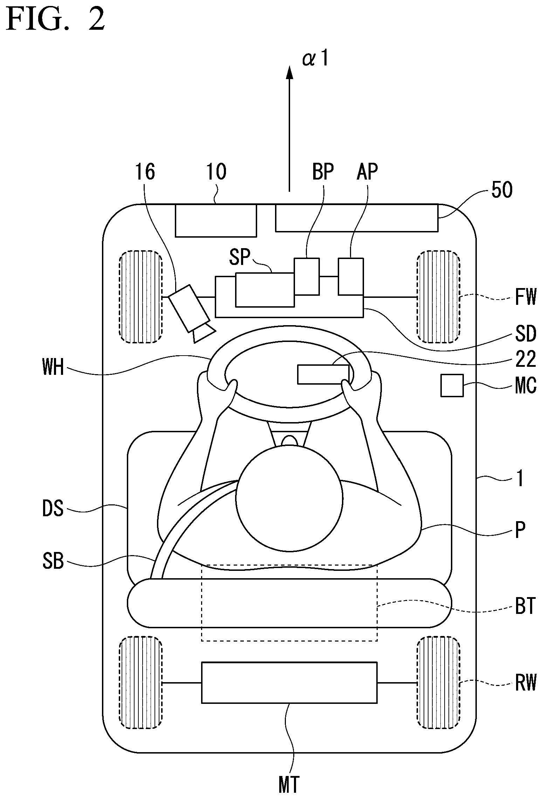

FIG. 2 is a perspective view of the mobile object 1 seen from above. In FIG. 2, FW denotes the steering wheel, RW denotes a driving wheel, SD denotes a steering device, MT denotes a motor, and BT denotes a battery. A steering device SD, a motor MT, and a battery BT are included in the drive device 40. Further, AP is an accelerator pedal, BP is a brake pedal, WH is a steering wheel, SP is a speaker, and MC is a microphone. The illustrated mobile object 1 is a one-person mobile object, and a passenger P is seated in a driver seat DS and is wearing a seat belt SB. Arrow α1 is the traveling direction (velocity vector) of the mobile object 1. The external detection device 10 is provided near a front end of the mobile object 1, the internal camera 16 is provided at a position where the internal camera can image the head of the passenger P from in front of the passenger P, and the mode changeover switch 22 is provided at a boss portion of the steering wheel WH. Further, an external notification device 50 as a display device is provided near the front end of the mobile object 1. The external notification device 50 may be formed integrally with a speaker SP.

Referring back to FIG. 1, the storage device 70 is a non-transitory storage device such as, for example, a hard disk drive (HDD), a flash memory, or a random access memory (RAM). The storage device 70 stores map information 72, a program 74 to be executed by the control device 100, and the like. Although the storage device 70 is shown outside a frame of the control device 100 in FIG. 1, the storage device 70 may be included in the control device 100.

### [Control Device]

The control device 100 includes, for example, a road type recognizer 120, an object recognizer 130, and a controller 140. For example, the control device 100 is realized by a hardware processor such as a central processing unit (CPU) executing a program (software) 74. Some or all of these components may be realized by hardware (circuit portion; including circuitry) such as a large scale integration (LSI), application specific integrated circuit (ASIC), field-programmable gate array (FPGA), or graphics processing unit (GPU), or may be realized by collaboration between software and hardware. The program may be stored in the storage device 70 in advance or may be stored in a removable storage medium (non-transitory storage medium) such as a DVD or CD-ROM and the storage medium may be mounted on the drive device and installed in the storage device 70.

The road type recognizer 120 recognizes whether the mobile object 1 is moving on a roadway or is moving on a sidewalk. For example, the road type recognizer 120 recognizes whether the mobile object 1 is moving on the roadway or moving on the sidewalk, for example, by analyzing an image captured by the external camera of the external detection device 10. An output of a radar device, LIDAR, sensor fusion device, or the like may be used as an auxiliary.

An example of the image analysis may include semantic segmentation. The road type recognizer 120 classifies respective pixels in a frame of the image into classes (roadway, sidewalk, boundary, obstacle, and the like), assigns labels to the classes, recognizes that the mobile object 1 is moving on the roadway when many pixels to which a roadway label has been assigned are present in an area corresponding to the front of the mobile object 1, and recognizes that the mobile object 1 is moving on the sidewalk when many pixels to which a sidewalk label has been assigned are present in the area corresponding to the front of the mobile object 1 in the image. The present invention is not limited thereto, and the road type recognizer 120 may recognize that the mobile object 1 is moving on the roadway when a vehicle is recognized in the area corresponding to the front of the mobile object 1 in the image, and recognize that the mobile object 1 is moving on the sidewalk when a pedestrian is recognized in the area corresponding to the front of the mobile object 1 in the image. Further, the road type recognizer 120 may recognize that the mobile object 1 is moving on the roadway when a width of a road surface area in the area corresponding to the front of the mobile object 1 in the image is large, and may recognize that the mobile object 1 is moving on the sidewalk when the width of the road surface area in the area corresponding to the front of the mobile object 1 in the image is small.

Further, the road type recognizer 120 may collate the position information of the mobile object 1 from the position measurement device 18 with the map information 72, and recognize whether the mobile object 1 is moving on the roadway or on a sidewalk. The map information in this case needs to have enough accuracy to distinguish between the sidewalk and the roadway from position coordinates. Further, when the "predetermined area" is not only the sidewalk, the road type recognizer 120 performs the same processing on a roadside strip, a bicycle lane, a public open space, and the like.

The object recognizer 130 recognizes objects present around the mobile object 1 (within a predetermined distance from the mobile object 1) on the basis of an output of the external detection device 10. The objects include some or all of a mobile object such as a vehicle, a bicycle, or a pedestrian, a traveling road boundary such as a road marking, step, guardrail, road shoulder, or a median strip, a structure installed on a road such as a road sign or a signboard, and an obstacle such as a falling object present (falling) on a traveling road. Further, the object recognizer 130 may recognize a step or a groove present between the roadway and the sidewalk (at a boundary). The object recognizer 130, for example, inputs the image captured by the external camera of the external detection device 10 to a trained model trained to output information such as the presence, position, and type of an object to acquire information such as the presence, position, and type of another mobile object when the image captured by the external camera of the external detection device 10 is input. The type of other mobile object can also be estimated on the basis of a size in the image, intensity of a reflected wave received by a radar device of the external detection device 10, and the like. Further, the object recognizer 130 may recognize a speed of the other mobile object detected using Doppler shift or the like by a radar device, for example.

For example, the controller 140 controls the drive device 40 according to the driving mode set by the mode changeover switch 22 or the like. The mobile object 1 may execute only some of the following driving modes, but in either case, the controller 140 basically makes a speed limit value different between a case where the mobile object 1 moves on the roadway or the mobile object 1 moves on the sidewalk. In this case, the mode changeover switch 22 may be omitted.

In mode A-1, the controller 140 refers to information on the traveling road and the object based on an output of the object recognizer 130 to control the motor MT of the drive device 40 so that switching to the first traveling state is performed and a distance to the object present in front of the mobile object 1 is maintained at a certain distance or more when the mobile object 1 moves on the roadway, and the mobile object 1 moves at a first speed V1 (for example, a speed equal to or higher than 10 km/h and lower than tens of km/h) when the distance to the object in front of the mobile object 1 is sufficiently long. The controller 140 controls the motor MT of the drive device 40 so that switching to the second traveling state is performed and the distance to the object in front of the mobile object 1 is maintained at a certain distance or more when the mobile object 1 moves on the sidewalk, and the mobile object 1 moves at a second speed V2 (for example, a speed less than 10 km/h) when the distance to the object in front of the mobile object 1 is sufficiently long. This function is the same as an adaptive cruise control (ACC) function of the vehicle with the first speed V1 or the second speed V2 as a set speed, and a technology used in the ACC can be used. Further, in mode A-1, the controller 140 controls the steering device SD so that the steering device SD changes the steering angle of the steering wheel on the basis of an amount of operation of the operator 14 such as the steering wheel. This function is the same as that of a power steering device, and it is possible to use a technology that is used in the power steering device. The mobile object 1 may include a steering device in which the operator 14 and a steering mechanism are mechanically connected, without electronically controlling the steering.

In mode A-2, the controller 140 refers to the information on the traveling road and the object based on the output of the object recognizer 130 to generate a target trajectory on which the mobile object 1 can move while avoiding objects within the traveling road, and controls the steering device SD of the drive device 40 so that the mobile object 1 moves along the target trajectory. For acceleration or deceleration, the controller 140 controls the motor MT of the drive device 40 on the basis of a speed of the mobile object 1 and an amount of operation of the accelerator pedal or the brake pedal. The controller 140 performs switching to the first traveling state and controls the motor MT of the drive device 40 with the first speed V1 as the upper limit speed when the mobile object 1 is moving on the roadway (in the case of mode A-2, this means that the mobile object 1 is not be accelerated even when there is a further acceleration instruction in a case where the upper limit speed is reached), and performs switching to the second traveling state and controls the drive device 40 with the second speed V2 as the upper limit speed when the mobile object 1 is moving on the sidewalk.

In mode B, the controller 140 controls the motor MT of the drive device 40 on the basis of the speed of the mobile object 1 and the amount of operation of the accelerator pedal or the brake pedal. The controller 140 performs switching to the first traveling state and controls the motor MT of the drive device 40 with the first speed V1 as the upper limit speed when the mobile object 1 is moving on the roadway (in the case of mode B, this means that the mobile object 1 is not be accelerated even when there is the further acceleration instruction in a case where the upper limit speed is reached), and performs switching to the second traveling state and controls the motor MT of the drive device 40 with the second speed V2 as the upper limit speed when the mobile object 1 is moving on the sidewalk. Steering is the same as in mode A-1.

In mode C, the controller 140 refers to the information on the traveling road and the object based on the output of the object recognizer 130 to generate a target trajectory on which the mobile object 1 can move while avoiding objects within the traveling road, and controls the drive device 40 so that the mobile object 1 moves along the target trajectory. Also in mode C, the controller 140 performs switching to the first traveling state to control the drive device 40 with the first speed V1 as the upper limit speed when the mobile object 1 is moving on the roadway, and performs switching to the second traveling state to control the drive device 40 with the second speed V2 as the upper limit speed when the mobile object 1 is moving on the sidewalk.

Here, a sidewalk area may be cut off due to a T-junction, a crossroad, a construction, or another road situation, and in this case, the mobile object 1 traveling on the sidewalk may temporarily travel the roadway and travel on the sidewalk again, or continuously travel on the roadway. In each driving mode described above, since a traveling state (for example, the upper speed limit) is switched depending on switching between the sidewalk and the roadway, switching between the traveling states occurs frequently, which is likely to place a burden on the mobile object 1 or the passenger P, when the mobile object 1 temporarily travels from the sidewalk to the roadway and then immediately travels back to the sidewalk. Therefore, the controller 140 switches or continues the traveling state depending on the intention of the passenger P of the mobile object 1 as the predetermined condition under the above-described road situation. Hereinafter, some traveling state switching patterns in the controller 140 will be separately described.

### <First Switching Pattern>

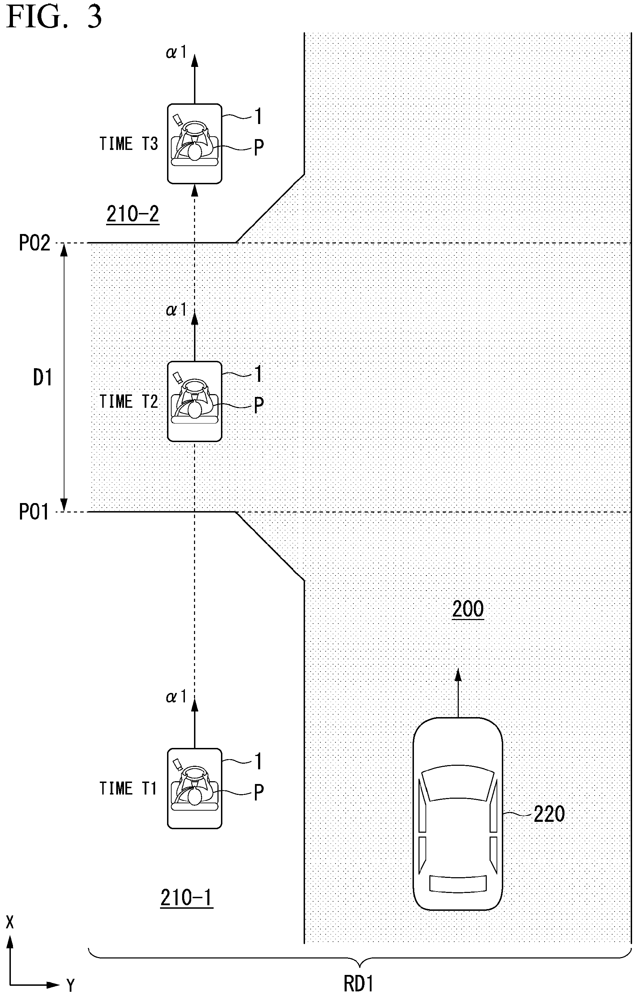

FIG. 3 is a diagram illustrating a first switching pattern of the traveling state of the mobile object 1. In the example of FIG. 3, a road RD1 including a roadway area 200 and a sidewalk area 210 is shown. It is assumed that the road RD1 extends in an X-axis direction in FIG. 3, and that the mobile object 1 and a vehicle 220 are traveling in an extending direction. Further, in the example of FIG. 3, it is assumed that the sidewalk area 210 is divided into a sidewalk area 210-1 on the front side and a sidewalk area 210-2 on the rear side in the traveling direction of the mobile object 1 (in other words, a direction in which the road RD1 extends). Further, in FIG. 3, it is assumed that time T1 is the earliest, and time T2 (T2# to be described later) and T3 are delayed in this order. Further, FIG. 3 shows a position or traveling direction of the mobile object 1 at each time. It is assumed that the same applies to subsequent figures.

At time T1, the mobile object 1 is traveling in the extending direction on the sidewalk area 210-1 of the road RD1. In this case, the road type recognizer 120 recognizes that a type of road on which the mobile object 1 is currently traveling is the sidewalk. The controller 140 performs control so that the mobile object 1 is caused to travel in the second traveling state in which the mobile object 1 travels on the sidewalk. Further, the controller 140 causes the external notification device 50 to notify of, for example, information (text, graphics, sound, or lamp color) indicating that the mobile object is traveling on the sidewalk in the second traveling state.

At time T2, since the sidewalk area 210-1 and the sidewalk area 210-2 are cut off, the mobile object 1 travels in the roadway area 200 toward the sidewalk area 210-2 from the sidewalk area 210-1. In this case, the road type recognizer 120 recognizes that the type of road on which the mobile object 1 is currently traveling is the roadway. Furthermore, the object recognizer 130 recognizes that the sidewalk area 210-2 is present in the traveling direction (front) of the mobile object 1. The controller 140 performs switching between the first traveling state and the second traveling state in response to an instruction regarding the traveling state of the mobile object 1 received from the passenger P when the mobile object 1 that has been traveling on the sidewalk area 210-1 travels on the roadway area 200, on the basis of recognition results of the road type recognizer 120 and the object recognizer 130. Here, the instruction regarding the traveling state of the mobile object 1 received from the passenger P is, for example, an instruction based on the intention of the passenger P indicating whether the passenger P wants to travel on the sidewalk or wants to travel on the roadway. Further, the instruction regarding the traveling state of the mobile object 1 received from the passenger P may be, for example, an instruction for transferring, to the mobile object 1, an intention as to whether the passenger P wants to cause the mobile object 1 to travel in the first traveling state or to travel in the second traveling state (an instruction for transferring a traveling state desired by the passenger P to the mobile object 1). That is, when the mobile object 1 that has been traveling on the sidewalk area 210-1 travels on the roadway area 200, the controller 140 switches the traveling state after confirming the intention of the passenger P.

For example, the controller 140 confirms the intention of the passenger on the basis of the steering content of the passenger received by the steering wheel included in the operator 14, for example. For example, when the amount of steering of the steering wheel during a predetermined period of time (for example, from time T1 to time T2) (or the amount of steering after the mobile object 1 leaves the sidewalk area 210-1) is smaller than the predetermined amount, the controller 140 confirms (estimates) the intention of the passenger P to travel on the sidewalk (intention to continue the second traveling state), and continues the second traveling state even at time T2 the mobile object 1 travels on the roadway. Accordingly, since the mobile object 1 travels on the sidewalk (the sidewalk area 210-2) again, and the second traveling state continues after time T3, it is possible to reduce the burden on the mobile object 1 or the passenger P due to switching between the traveling states and to cause the mobile object 1 to travel in a more appropriate traveling state.

When a distance D1 from a termination end PO1 of the sidewalk area 210-1 on which the mobile object 1 was traveling to a starting end PO2 of the sidewalk area 210-2 toward which the mobile object 1 is heading (which is present in the traveling direction of the mobile object 1) is long, the mobile object 1 must continue to travel in the roadway area 200 at low speed, which may obstruct, for example, other vehicles (for example, the vehicle 220) traveling in the roadway area 200 when the other vehicles wish to turn left. Therefore, the controller 140 may perform control for continuing the second traveling state in a case where the distance D1 from the sidewalk area 210-1 where the mobile object 1 was traveling to the next sidewalk area 210-2 (an example of another predetermined area) is smaller than a predetermined distance Dth, in addition to the case where the amount of steering is smaller than the predetermined amount. This makes it possible for the mobile object 1 to travel more appropriately without interfering with the traveling of nearby vehicles or the like.

Further, the controller 140 causes the external notification device 50 to notify of, for example, information (text, graphics, sound, or lamp color) indicating that the mobile object is exceptionally traveling on the roadway in the second traveling state. In this case, the controller 140 causes, for example, light to be emitted in a display aspect (for example, different colors or blinking) different from the color of the light emitted by the lamp when the mobile object is traveling on the roadway in the first traveling state and the color of the light emitted by the lamp when the mobile object is traveling on the sidewalk in the second traveling state. Further, the controller 140 may display text or graphics indicating that "the mobile object is traveling at a low speed because the mobile object is heading toward the sidewalk" or "the mobile object is traveling at a low speed because the mobile object is temporarily traveling on the roadway" on the display device of the external notification device 50.

When the mobile object 1 temporarily travels in the roadway area 200 in the second traveling state according to the intention of the passenger P along a traveling route as shown in FIG. 3, the second traveling state continues without the switching from the second traveling state to the first traveling state even when an operation to accelerate the mobile object 1 is received by an accelerator pedal, a speed adjustment dial, a lever, or the like included in the operator 14 during traveling in the roadway area 200. Therefore, speed control with the second speed V2 as the upper limit speed is executed.

Further, when the amount of steering of the steering wheel for a predetermined period of time (or an amount of steering after the mobile object 1 leaves the sidewalk area 210-1) is equal to or larger than the predetermined amount, the controller 140 confirms (estimates) an intention of the passenger P to travel on the roadway (intention to switch to the first traveling state), and performs switching from the second traveling state to the first traveling state.

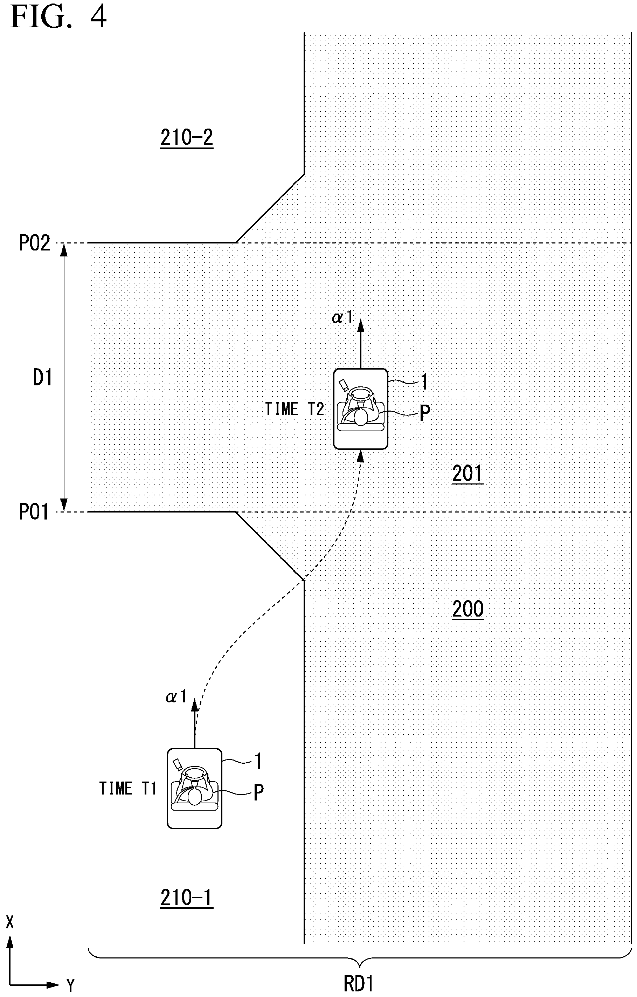

FIG. 4 is a diagram showing an example of switching from the second traveling state to the first traveling state. The example in FIG. 4 differs from the example in FIG. 3 in that the steering amount is equal to or larger than a predetermined amount due to the steering operation by the passenger P between time T1 and time T2. Thus, when the mobile object 1 moves toward the roadway area 200 (in other words, in a direction away from the sidewalk area 210-2) due to the steering control of the passenger P, the controller 140 switches the traveling state of the mobile object 1 from the second traveling state to the first traveling state. Further, the controller 140 causes the external notification device 50 to notify, for example, information (text, graphics, sound, or lamp color) indicating that the mobile object is traveling on the roadway in the first traveling state. Accordingly, since the mobile object 1 can accelerate to a second speed, which is higher than the second speed which is the upper limit speed when the mobile object 1 travels on the sidewalk, it is possible to curb interference with traveling of nearby vehicles and perform more appropriate traveling.

### <Second Switching Pattern>

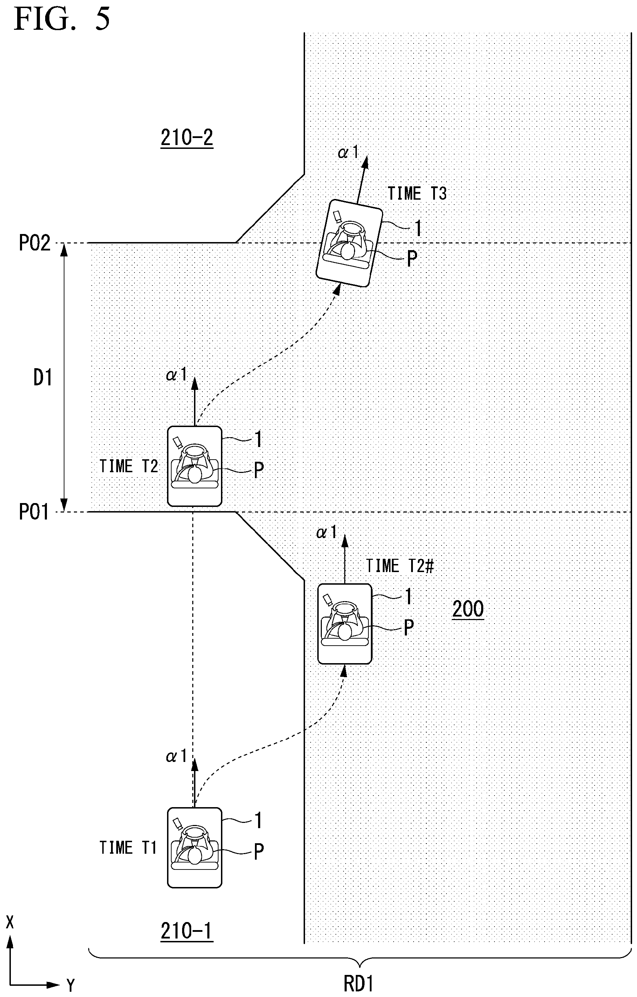

FIG. 5 is a diagram illustrating the second switching pattern of the traveling state of the mobile object 1. In the example of FIG. 5, the same road RD1 as in FIGS. 3 and 4 is shown. At time T1, the mobile object 1 is traveling in an extension direction on the sidewalk area 210-1 of the road RD1. The road type recognizer 120 recognizes that the type of road on which the mobile object 1 is currently traveling is the sidewalk. The controller 140 causes the mobile object 1 to travel in the second traveling state in which the mobile object 1 travels on the sidewalk, and causes the external notification device 50 to notify of, for example, the information (text, graphics, sound, or lamp color) indicating that the mobile object is traveling on the sidewalk in the second traveling state.

At time T2, the road type recognizer 120 recognizes that the type of road on which the mobile object 1 is currently traveling is the roadway. Here, in the second switching pattern, the controller 140 confirms the intention of the passenger P on the basis of the position of the mobile object. For example, when the sidewalk area is present in a road width direction (Y-axis direction in the figure) with respect to a current position of the mobile object 1, the object recognizer 130 confirms (estimates) the intention of the passenger to travel on the roadway, and performs switching from the second traveling state to the first traveling state. At time T3 shown in FIG. 5, the sidewalk area 210-2 is present in the road width direction at a reference position (for example, a center of gravity) of the mobile object 1. Therefore, in the second switching pattern, the controller 140 switches the traveling state of the mobile object 1 from the second traveling state to the first traveling state at time T3.

Further, the mobile object 1 switches the traveling state of the mobile object 1 from the second traveling state to the first traveling state since the sidewalk area 210-1 is present in a position of the mobile object 1 in the road width direction even when the mobile object goes to the roadway area 200 (when the mobile object moves to a position shown at time T2# shown in FIG. 5) before the mobile object 1 reaches the termination end PO1 of the sidewalk area 210-1 from a state in which the mobile object 1 is traveling on the sidewalk area 210-1. In the second switching pattern, it is possible to confirm the intention of the passenger and perform travel control of the mobile object 1 more appropriately according to the intention of the user, by setting the condition that the mobile object 1 is not moving toward the sidewalk even though there is the sidewalk in the road width direction from the reference position of the mobile object 1.

When there is a step or groove between the roadway and the sidewalk depending on the road situation, even when the passenger P wants to move the mobile object 1 from the roadway area to the sidewalk area, the passenger P may not be able to move immediately. Therefore, when the object recognizer 130 determines that a sidewalk is present in the road width direction from the reference position of the mobile object 1 and the sidewalk is an area where the mobile object 1 can move from the roadway, the controller 140 may perform control for switching the traveling state of the mobile object 1 traveling on the roadway from the second traveling state to the first traveling state.

### [Processing Flow]

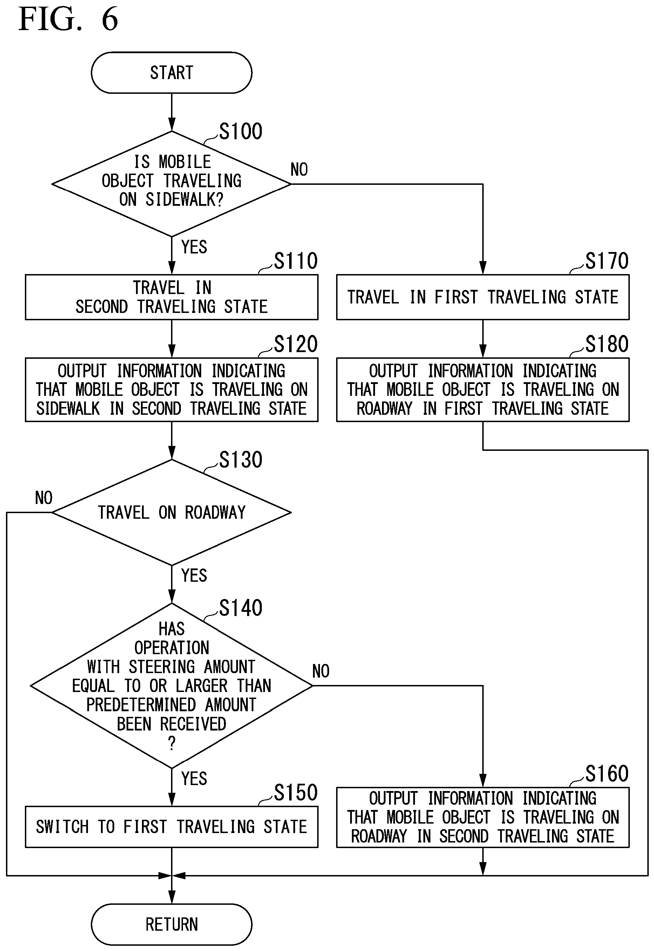

FIG. 6 is a flowchart showing an example of a flow of processing executed by the control device 100 of the embodiment. In the example of FIG. 6, traveling state switching processing among various types of processing that are executed by the control device 100 will be mainly described. The processing in FIG. 6 may be repeatedly executed at a predetermined timing. In the example of FIG. 6, the road type recognizer 120 determines whether the mobile object 1 is traveling on the sidewalk (step S100). When a determination is made that the mobile object is traveling on a sidewalk, the controller 140 causes the mobile object to travel in the second traveling mode (step S110). Further, the controller 140 causes the external notification device 50 to output the information indicating that the mobile object is traveling on the sidewalk in the second traveling state (step S120).

Next, the road type recognizer 120 determines whether the mobile object 1 is traveling on the roadway (step S130). When a determination is made that the mobile object is traveling on the roadway, the controller 140 determines whether or not an operation with a steering amount equal to or larger than a predetermined amount has been received by the operator 14 (step S140). When a determination is made that an operation with the steering amount equal to or larger than the predetermined amount has been received, the controller 140 switches the traveling state of the mobile object 1 from the second traveling state to the first traveling state (step S150). Further, in the processing of step S140, when a determination is made that the operation with the steering amount equal to or larger than the predetermined amount has not been received (the steering amount is smaller than the predetermined amount), the controller 140 continues the second traveling state until the mobile object travels on the sidewalk next time and causes the external notification device 50 to output information indicating that the mobile object is traveling on the roadway in the second traveling state (step S160)

Further, in the processing of step S 100, when a determination is made that the mobile object 1 is not traveling on the sidewalk, the controller 140 causes the mobile object 1 to travel in the first traveling state (step S 170), and causes the external notification device 50 to output the information indicating that the mobile object 1 is traveling on the roadway in the first traveling state (step S180). Accordingly, the processing of this flowchart ends. Further, in the processing of step S130, when a determination is made that the mobile object 1 is not traveling on the roadway, the processing of the flowchart ends.

### <Modification Examples>

In the embodiment described above, the intention of the passenger P may be confirmed on the basis of the traveling state received by the mode changeover switch 22 instead of (or in addition to) confirming the intention of the passenger P according to the amount of steering obtained from the operator 14. For example, the controller 140 maintains the second traveling state when an instruction to perform the second traveling state is received by the mode changeover switch 22, and performs switching from the second traveling state to the first traveling state when an instruction to perform the first traveling state is received, in a case where the mobile object 1 that has been traveling on the sidewalk is traveling on the roadway and another sidewalk is present in front of the mobile object 1 (in the traveling direction). This makes it possible to ascertain the intention of the passenger P more accurately, and to realize appropriate travel control depending on the intention. Further, in the embodiment, the traveling state switching control may be performed on the basis of a traveling state switching operation analyzed on the basis of information obtained from the microphone MC or the internal camera 16 instead of (or in addition to) the mode changeover switch 22.

Further, in the embodiment, when the controller 140 performs exceptional travel control (for example, when the mobile object 1 is traveling on the roadway in the second traveling state), the controller 140 may notify the passenger of information for performing switching to the first traveling state. In this case, the controller 140 causes, for example, at least one of information on a reason why the second traveling state is being executed even though the mobile object is traveling on the roadway and information indicating an operation to be performed for switching to the first traveling state to be notified from the speaker SP or the external notification device 50 to the passenger. This makes it possible to cause the passenger to more accurately ascertain a situation of the mobile object 1, and also transfer the intention of the passenger to the mobile object 1 more accurately through a predetermined operation.

According to the embodiment described above, a device 100 for controlling a mobile object 1 capable of moving both on a roadway and in a predetermined area different from the roadway, one or more passengers boarding the mobile object, includes a road type recognizer 120 configured to recognize whether the mobile object 1 is moving on the roadway or moving in the predetermined area on the basis of an output of an external detection device 10 configured to detect an external situation of the mobile object 1; and a controller 140 configured to cause the mobile object to travel in any one of a first traveling state in which a speed of the mobile object 1 is limited to a first speed and a second traveling state in which the speed of the mobile object 1 is limited to a second speed lower than the first speed, on the basis of a road type recognized by the road type recognizer, wherein the controller 140 causes the mobile object 1 to travel in the second traveling state when the mobile object 1 is traveling in the predetermined area, and performs switching between the first traveling state and the second traveling state in response to an instruction regarding the traveling state of the mobile object received from the passenger when the mobile object 1 is caused to travel from the predetermined area to the roadway, thereby causing the mobile object to travel in a more appropriate traveling state depending on a surrounding road situation.

The embodiment described above can be expressed as follows.

A device for controlling a mobile object includes a storage medium that stores instructions readable by a computer for controlling a mobile object capable of moving both on a roadway and in a predetermined area different from the roadway, one or more passengers boarding the mobile object, and a processor connected to the storage medium, the processor executing the computer-readable instructions to: recognize whether the mobile object is moving on the roadway or moving in the predetermined area on the basis of an output of an external detection device configured to detect an external situation of the mobile object, cause the mobile object to travel in any one of a first traveling state in which a speed of the mobile object is limited to a first speed and a second traveling state in which the speed of the mobile object is limited to a second speed lower than the first speed, on the basis of a recognized road type, and cause the mobile object to travel in the second traveling state when the mobile object is traveling in the predetermined area, and perform switching between the first traveling state and the second traveling state in response to an instruction regarding the traveling state of the mobile object received from the passenger when the mobile object is caused to travel from the predetermined area to the roadway.

### [Reference Signs List]

10 External detection device
12 Mobile object sensor
14 Operator
16 Internal camera
18 Position measurement device
22 Mode changeover switch
30 Moving mechanism
40 Drive device
50 External notification device
70 Storage device
100 Control device
120 Road type recognizer
130 Object recognizer
140 Controller

## Claims

1. A device for controlling (100) a mobile object (1) capable of moving both on a roadway and in a predetermined area different from the roadway, one or more passengers boarding the mobile object (1), the device for controlling (100) a mobile object (1) comprising:
a road type recognizer (120) configured to recognize whether the mobile object (1) is moving on the roadway or moving in the predetermined area on the basis of an output of an external detection device (10) configured to detect an external situation of the mobile object (1); and
a controller (140) configured to cause the mobile object (1) to travel in any one of a first traveling state in which a speed of the mobile object (1) is limited to a first speed and a second traveling state in which the speed of the mobile object (1) is limited to a second speed lower than the first speed, on the basis of a road type recognized by the road type recognizer (120), wherein
the controller (140) is configured to cause the mobile object (1) to travel in the second traveling state when the mobile object (1) is traveling in the predetermined area, and to perform switching between the first traveling state and the second traveling state in response to an instruction regarding the traveling state of the mobile object (1) received from the passenger when the mobile object (1) is caused to travel from the predetermined area to the roadway,
**characterised by**
an operator (14) configured to receive a driving operation for the mobile object (1) by the passenger,
wherein the controller (140) is configured to determine whether to perform switching from the second traveling state to the first traveling state on the basis of a steering operation of the mobile object (1) by the operator (14).

2. The device for controlling (100) a mobile object (1) according to claim 1,
wherein the controller (140) is configured not to perform switching from the second traveling state to the first traveling state even when the mobile object (1) travels on the roadway from the predetermined area when an amount of steering by the operator (14) is smaller than a predetermined amount.

3. The device for controlling (100) a mobile object (1) according to claim 2,
wherein, when the mobile object (1) is configured to move from the predetermined area to the roadway and the amount of steering by the operator (14) is smaller than the predetermined amount, the controller (140) does not perform the switching from the second traveling state to the first traveling state even when an operation to accelerate the mobile object (1) is received by the operator (14).

4. The device for controlling (100) a mobile object (1) according to claim 1,
wherein the controller (140) is configured to continue the second traveling state when the amount of steering by the operator (14) is smaller than the predetermined amount and a distance from the predetermined area in which the mobile object (1) is traveling to another predetermined area is smaller than a predetermined distance.

5. The device for controlling (100) a mobile object (1) according to claim 1,
wherein the controller (140) is configured to perform switching from the second traveling state to the first traveling state when control for moving the mobile object (1) toward the roadway through a steering operation in the operator (14) is performed.

6. The device for controlling (100) a mobile object (1) according to claim 1,
wherein the controller (140) is configured to perform switching from the second traveling state to the first traveling state when the predetermined area is present in a road width direction with a position of the mobile object (1) leaving the predetermined area and traveling on the roadway as a reference.

7. The device for controlling (100) a mobile object (1) according to claim 1, further comprising:
a switching receiver configured to configured receive an instruction regarding switching a traveling state of the mobile object (1), wherein
the controller (140) is configured to determine whether to perform switching from the second traveling state to the first traveling state on the basis of the instruction received by the switching receiver.

8. The device for controlling (100) a mobile object (1) according to claim 1,
wherein the controller (140) is configured to notify an external notification device of the mobile object (1) that the mobile object (1) is traveling on the roadway in the second traveling state when the mobile object (1) is traveling on the roadway in the second traveling state.

9. The device for controlling (100) a mobile object (1) according to claim 1,
wherein the controller (140) is configured to notify the passenger of information for switching from the second traveling state to the first traveling state when the mobile object (1) is traveling on the roadway in the second traveling state.

10. A method for controlling a mobile object (1) comprising:
recognizing whether the mobile object (1) is moving on a roadway or moving in a predetermined area on the basis of an output of an external detection device (10) configured to detect an external situation of the mobile object (1), by a computer for controlling the mobile object (1) capable of moving both on the roadway and in the predetermined area different from the roadway, one or more passengers boarding the mobile object (1);
causing, by the computer, the mobile object (1) to travel in any one of a first traveling state in which a speed of the mobile object (1) is limited to a first speed and a second traveling state in which the speed of the mobile object (1) is limited to a second speed lower than the first speed, on the basis of a recognized road type; [[and]]
causing, by the computer, the mobile object (1) to travel in the second traveling state when the mobile object (1) is traveling in the predetermined area, and performing switching between the first traveling state and the second traveling state in response to an instruction regarding the traveling state of the mobile object (1) received from the passenger when the mobile object (1) is caused to travel from the predetermined area to the roadway;
**characterised by**
determining, by the computer, whether to perform switching from the second traveling state to the first traveling state on the basis of a steering operation of the mobile object (1) received by an operator (14) that receives a driving operation for the mobile object (1) by the passenger.

11. A storage medium having a program stored therein, the program causing a computer for controlling a mobile object (1) capable of moving both on a roadway and in a predetermined area different from the roadway, one or more passengers boarding the mobile object (1), to
recognize whether the mobile object (1) is moving on the roadway or moving in the predetermined area on the basis of an output of an external detection device (10) configured to detect an external situation of the mobile object (1),
cause the mobile object (1) to travel in any one of a first traveling state in which a speed of the mobile object (1) is limited to a first speed and a second traveling state in which the speed of the mobile object (1) is limited to a second speed lower than the first speed, on the basis of a recognized road type, [[and]]
cause the mobile object (1) to travel in the second traveling state when the mobile object (1) is traveling in the predetermined area, and perform switching between the first traveling state and the second traveling state in response to an instruction regarding the traveling state of the mobile object (1) received from the passenger when the mobile object (1) is caused to travel from the predetermined area to the roadway,
**characterised by**
further causing the computer to
determine whether to perform switching from the second traveling state to the first traveling state on the basis of a steering operation of the mobile object (1) received by an operator (14) that receives a driving operation for the mobile object (1) by the passenger.

## Patentansprüche

1. Vorrichtung zum Steuern (100) eines beweglichen Objekts (1), welches dazu in der Lage ist, sich sowohl auf einer Fahrbahn als auch in einem vorbestimmten Bereich zu bewegen, welcher von der Fahrbahn verschieden ist, wobei ein oder mehrere Passagiere in das bewegliche Objekt (1) eingestiegen sind, wobei die Vorrichtung zum Steuern (100) eines beweglichen Objekts (1) umfasst:
eine Straßenart-Erkennungseinheit (120), welche dazu eingerichtet ist, auf Grundlage einer Ausgabe einer externen Detektionsvorrichtung (10) zu erkennen, welche dazu eingerichtet ist, eine externe Situation des beweglichen Objekts (1) zu detektieren, ob sich das bewegliche Objekt (1) auf der Fahrbahn bewegt oder sich in dem vorbestimmten Bereich bewegt; und
eine Steuereinheit (140), welche dazu eingerichtet ist, das bewegliche Objekt (1) auf Grundlage einer Straßenart dazu zu veranlassen, welche durch die Straßenart-Erkennungseinheit (120) erkannt worden ist, sich in einem jeglichen aus einem ersten Fortbewegungszustand, in welchem eine Geschwindigkeit des beweglichen Objekts (1) auf eine erste Geschwindigkeit begrenzt ist, und einem zweiten Fortbewegungszustand fortzubewegen, in welchem die Geschwindigkeit des beweglichen Objekts (1) auf eine zweite Geschwindigkeit begrenzt ist, welche niedriger als die erste Geschwindigkeit ist,
wobei die Steuereinheit (140) dazu eingerichtet ist, das bewegliche Objekt (1) dazu zu veranlassen, sich in dem zweiten Fortbewegungszustand fortzubewegen, wenn sich das bewegliche Objekt (1) in dem vorbestimmten Bereich fortbewegt, und als Reaktion auf eine Anweisung bezüglich des Fortbewegungszustands des beweglichen Objekts (1), welche von dem Passagier empfangen worden ist, ein Wechseln zwischen dem ersten Fortbewegungszustand und dem zweiten Fortbewegungszustand durchzuführen, wenn das bewegliche Objekt (1) dazu veranlasst wird, sich von dem vorbestimmten Bereich zu der Fahrbahn fortzubewegen,
**gekennzeichnet durch,**
einen Operator (14), welcher dazu eingerichtet ist, von dem Passagier einen Fahrvorgang für das bewegliche Objekt (1) zu empfangen,
wobei die Steuereinheit (140) dazu eingerichtet ist, auf Grundlage eines Lenkvorgangs des beweglichen Objekts (1) durch den Operator (14) zu bestimmen, ob ein Wechseln von dem zweiten Fortbewegungszustand zu dem ersten Fortbewegungszustand durchzuführen ist.

2. Vorrichtung zum Steuern (100) eines beweglichen Objekts (1) nach Anspruch 1,
wobei die Steuereinheit (140) dazu eingerichtet ist, ein Wechseln von dem zweiten Fortbewegungszustand zu dem ersten Fortbewegungszustand nicht durchzuführen, selbst wenn sich das bewegliche Objekt (1) auf der Fahrbahn von dem vorbestimmten Bereich fortbewegt, wenn ein Betrag eines Lenkens durch den Operator (14) kleiner als vorbestimmter Betrag ist.

3. Vorrichtung zum Steuern (100) eines beweglichen Objekts (1) nach Anspruch 2,
wobei, wenn das bewegliche Objekt (1) dazu eingerichtet ist, sich von dem vorbestimmten Bereich zu der Fahrbahn zu bewegen und der Betrag eines Lenkens durch den Operator (14) kleiner als der vorbestimmte Betrag ist, die Steuereinheit (140) das Wechseln von dem zweiten Fortbewegungszustand zu dem ersten Fortbewegungszustand nicht durchführt, selbst wenn ein Vorgang zum Beschleunigen des beweglichen Objekts (1) durch den Operator (14) empfangen wird.

4. Vorrichtung zum Steuern (100) eines beweglichen Objekts (1) nach Anspruch 1,
wobei die Steuereinheit (140) dazu eingerichtet ist, den zweiten Fortbewegungszustand fortzuführen, wenn der Betrag eines Lenkens durch den Operator (14) kleiner als der vorbestimmte Betrag ist und ein Abstand von dem vorbestimmten Bereich, in welchem sich das bewegliche Objekt (1) zu einem anderen vorbestimmten Bereich fortbewegt, kleiner als ein vorbestimmter Abstand ist.

5. Vorrichtung zum Steuern (100) eines beweglichen Objekts (1) nach Anspruch 1,
wobei die Steuereinheit (140) dazu eingerichtet ist, ein Wechseln von dem zweiten Fortbewegungszustand zu dem ersten Fortbewegungszustand durchzuführen, wenn ein Steuern zum Bewegen des beweglichen Objekts (1) in Richtung der Fahrbahn mittels eines Lenkvorgangs in dem Operator (14) durchgeführt wird.

6. Vorrichtung zum Steuern (100) eines beweglichen Objekts (1) nach Anspruch 1,
wobei die Steuereinheit (140) dazu eingerichtet ist, ein Wechseln von dem zweiten Fortbewegungszustand zu dem ersten Fortbewegungszustand durchzuführen, wenn der vorbestimmte Bereich in einer Straßenbreitenrichtung als eine Referenz vorhanden ist, wenn eine Position des beweglichen Objekts (1) den vorbestimmten Bereich verlässt und sich auf der Fahrbahn fortbewegt.

7. Vorrichtung zum Steuern (100) eines beweglichen Objekts (1) nach Anspruch 1, ferner umfassend:
einen Wechselempfänger, welcher dazu eingerichtet ist, eine Anweisung bezüglich eines Wechselns eines Fortbewegungszustands des beweglichen Objekts (1) zu empfangen, wobei
die Steuereinheit (140) dazu eingerichtet ist, auf Grundlage der Anweisung zu bestimmen, welche von dem Wechselempfänger empfangen worden ist, ob ein Wechseln von dem zweiten Fortbewegungszustand zu dem ersten Fortbewegungszustand durchzuführen ist.

8. Vorrichtung zum Steuern (100) eines beweglichen Objekts (1) nach Anspruch 1,
wobei die Steuereinheit (140) dazu eingerichtet ist, eine externe Benachrichtigungsvorrichtung des beweglichen Objekts (1) zu benachrichtigen, dass sich das bewegliche Objekt (1) in dem zweiten Fortbewegungszustand auf der Fahrbahn fortbewegt, wenn sich das bewegliche Objekt (1) in dem zweiten Fortbewegungszustand auf der Fahrbahn fortbewegt.

9. Vorrichtung zum Steuern (100) eines beweglichen Objekts (1) nach Anspruch 1,
wobei die Steuereinrichtung (140) dazu eingerichtet ist, den Passagier über eine Information eines Wechselns von dem zweiten Fortbewegungszustand zu dem ersten Fortbewegungszustand zu benachrichtigen, wenn sich das bewegliche Objekt (1) in dem zweiten Fortbewegungszustand auf der Fahrbahn fortbewegt.

10. Verfahren zum Steuern eines beweglichen Objekts (1), umfassend:
Erkennen, auf Grundlage einer Ausgabe einer externen Detektionsvorrichtung (10), welche dazu eingerichtet ist, eine externe Situation des beweglichen Objekts (1) zu detektieren, ob sich das bewegliche Objekt (1) auf einer Fahrbahn bewegt oder sich in einem vorbestimmten Bereich bewegt, durch einen Computer zum Steuern des beweglichen Objekts (1), welches dazu in der Lage ist, sich sowohl auf einer Fahrbahn als auch in einem vorbestimmten Bereich zu bewegen, welcher von der Fahrbahn verschieden ist, wobei ein oder mehrere Passagiere in das bewegliche Objekt (1) eingestiegen sind;
Veranlassen, durch den Computer, des beweglichen Objekts (1) sich in einem jeglichen aus einem ersten Fortbewegungszustand, in welchem eine Geschwindigkeit des beweglichen Objekts (1) auf eine erste Geschwindigkeit begrenzt ist, und einem zweiten Fortbewegungszustand fortzubewegen, in welchem die Geschwindigkeit des beweglichen Objekts (1) auf eine zweite Geschwindigkeit begrenzt ist, welche niedriger als die erste Geschwindigkeit ist, auf Grundlage einer erkannten Straßenart; [[und]]
Veranlassen, durch den Computer, des beweglichen Objekts (1) sich in dem zweiten Fortbewegungszustand fortzubewegen, wenn sich das bewegliche Objekt (1) in dem vorbestimmten Bereich fortbewegt, und Durchführen, als Reaktion auf eine Anweisung bezüglich des Fortbewegungszustands des beweglichen Objekts (1), welche von dem Passagier empfangen worden ist, eines Wechselns zwischen dem ersten Fortbewegungszustand und dem zweiten Fortbewegungszustand, wenn das bewegliche Objekt (1) dazu veranlasst wird, sich von dem vorbestimmten Bereich zu der Fahrbahn fortzubewegen;
**gekennzeichnet durch,**
Bestimmen, durch den Computer, ob ein Wechseln von dem zweiten Fortbewegungszustand zu dem ersten Fortbewegungszustand durchzuführen ist, auf Grundlage eines Lenkvorgangs des beweglichen Objekts (1), welcher von dem Operator (14) empfangen wird, welcher einen Fahrvorgang für das bewegliche Objekt (1) durch den Passagier empfängt.

11. Speichermedium, welches darauf gespeichert ein Programm aufweist, wobei das Programm einen Computer dazu veranlasst, ein bewegliches Objekt (1) zu steuern, welches dazu in der Lage ist, sich sowohl auf einer Fahrbahn als auch in einem vorbestimmten Bereich zu bewegen, welcher von der Fahrbahn verschieden ist, wobei ein oder mehrere Passagiere in das bewegliche Objekt (1) eingestiegen sind, zum:
Erkennen, auf Grundlage einer Ausgabe einer externen Detektionsvorrichtung (10), welche dazu eingerichtet ist, eine externe Situation des beweglichen Objekts (1) zu detektieren, ob sich das bewegliche Objekt (1) auf der Fahrbahn bewegt oder sich in dem vorbestimmten Bereich bewegt,
Veranlassen des beweglichen Objekts (1) sich in einem jeglichen aus einem ersten Fortbewegungszustand, in welchem eine Geschwindigkeit des beweglichen Objekts (1) auf eine erste Geschwindigkeit begrenzt ist, und einem zweiten Fortbewegungszustand fortzubewegen, in welchem die Geschwindigkeit des beweglichen Objekts (1) auf eine zweite Geschwindigkeit begrenzt ist, welche niedriger als die erste Geschwindigkeit ist, auf Grundlage einer erkannten Straßenart, [[und]]
Veranlassen des beweglichen Objekts (1) sich in dem zweiten Fortbewegungszustand fortzubewegen, wenn sich das bewegliche Objekt (1) in dem vorbestimmten Bereich fortbewegt, und Durchführen, als Reaktion auf eine Anweisung bezüglich des Fortbewegungszustands des beweglichen Objekts (1), welche von dem Passagier empfangen worden ist, eines Wechselns zwischen dem ersten Fortbewegungszustand und dem zweiten Fortbewegungszustand, wenn das bewegliche Objekt (1) dazu veranlasst wird, sich von dem vorbestimmten Bereich zu der Fahrbahn fortzubewegen,
**gekennzeichnet durch,**
ein weiteres Veranlassen des Computers, zum:
Bestimmen, ob ein Wechseln von dem zweiten Fortbewegungszustand zu dem ersten Fortbewegungszustand durchzuführen ist, auf Grundlage eines Lenkvorgangs des beweglichen Objekts (1), welcher von dem Operator (14) empfangen wird, welcher einen Fahrvorgang für das bewegliche Objekt (1) durch den Passagier empfängt.

## Revendications

1. Dispositif (100) pour la commande d'un objet mobile (1) apte à se déplacer à la fois sur une chaussée et dans une zone prédéterminée différente de la chaussée, un ou plusieurs passagers embarquant dans l'objet mobile (1), le dispositif de commande (100) d'un objet mobile (1) comportant :
un dispositif de reconnaissance de type de route (120) configuré pour reconnaître si l'objet mobile (1) se déplace sur la chaussée ou se déplace dans la région prédéterminée sur la base d'une sortie d'un dispositif de détection externe (10) configuré pour détecter une situation externe de l'objet mobile (1) ; et
un dispositif de commande (140) configuré pour amener l'objet mobile (1) à se déplacer dans l'un quelconque d'un premier état de déplacement dans lequel une vitesse de l'objet mobile (1) est limitée à une première vitesse et un second état de déplacement dans lequel la vitesse de l'objet mobile (1) est limitée à une seconde vitesse inférieure à la première vitesse, sur la base d'un type de route reconnu par le dispositif de reconnaissance de type de route (120), dans lequel
le dispositif de commande (140) est configuré pour amener l'objet mobile (1) à se déplacer dans le second état de déplacement lorsque l'objet mobile (1) se déplace dans la zone prédéterminée, et pour réaliser une commutation entre le premier état de déplacement et le second état de déplacement en réponse à une instruction concernant l'état de déplacement de l'objet mobile (1) reçue à partir du passager lorsque l'objet mobile (1) est amené à se déplacer de la zone prédéterminée vers la chaussée,
**caractérisé par**
un opérateur (14) configuré pour recevoir une opération de conduite de l'objet mobile (1) par le passager,
dans lequel le dispositif de commande (140) est configuré pour déterminer si réaliser une commutation du second état de déplacement vers le premier état de déplacement sur la base d'une opération de direction de l'objet mobile (1) par l'opérateur (14).

2. Dispositif (100) pour la commande d'un objet mobile (1) selon la revendication 1,
dans lequel le dispositif de commande (140) est configuré pour ne pas réaliser de commutation du second état de déplacement vers le premier état de déplacement même lorsque l'objet mobile (1) se déplace sur la chaussée à partir de la zone prédéterminée lorsqu'une quantité de direction par l'opérateur (14) est inférieure à une quantité prédéterminée.

3. Dispositif (100) pour la commande d'un objet mobile (2) selon la revendication 2,
dans lequel, lorsque l'objet mobile (1) est configuré pour se déplacer de la zone prédéterminée vers la chaussée et que la quantité de direction par l'opérateur (14) est inférieure à la quantité prédéterminée, le dispositif de commande (140) ne réalise pas la commutation du second état de déplacement vers premier état de déplacement même lorsqu'une opération d'accélération de l'objet mobile (1) est reçue par l'opérateur (14).

4. Dispositif (100) pour la commande d'un objet mobile (1) selon la revendication 1,
dans lequel le dispositif de commande (140) est configuré pour poursuivre le second état de déplacement lorsque la quantité de direction par l'opérateur (14) est inférieure à la quantité prédéterminée et qu'une distance par rapport à la zone prédéterminée dans laquelle l'objet mobile (1) se déplace vers une autre zone prédéterminée est inférieure à une distance prédéterminée.

5. Dispositif (100) pour la commande d'un objet mobile (1) selon la revendication 1,
dans lequel le dispositif de commande (140) est configuré pour réaliser une commutation du second état de déplacement vers le premier état de déplacement lorsque la commande pour le déplacement de l'objet mobile (1) vers la chaussée par le biais d'une opération de direction dans l'opérateur (14) est réalisée.

6. Dispositif (100) pour la commande d'un objet mobile (1) selon la revendication 1,
dans lequel le dispositif de commande (140) est configuré pour réaliser une commutation du second état de déplacement vers le premier état de déplacement lorsque la zone prédéterminée est présente dans une direction de largeur de route avec une position de l'objet mobile (1) quittant la zone prédéterminée et se déplaçant sur la chaussée comme référence.

7. Dispositif (100) pour la commande d'un objet mobile (1) selon la revendication 1, comportant en outre :
un récepteur de commutation configuré pour recevoir une instruction concernant la commutation d'un état de déplacement de l'objet mobile (1), dans lequel
le dispositif de commande (140) est configuré pour déterminer si réaliser une commutation du second état de déplacement vers le premier état de déplacement sur la base de l'instruction reçue par le récepteur de commutation.

8. Dispositif (100) pour la commande d'un objet mobile (1) selon la revendication 1,
dans lequel le dispositif de commande (140) est configuré pour notifier à un dispositif de notification externe de l'objet mobile (1) que l'objet mobile (1) se déplace sur la chaussée dans le second état de déplacement lorsque l'objet mobile (1) se déplace sur la chaussée dans le second état de déplacement.

9. Dispositif (100) pour la commande d'un objet mobile (1) selon la revendication 1,
dans lequel le dispositif de commande (140) est configuré pour notifier au passager des informations pour commuter du second état de déplacement vers le premier état de déplacement lorsque l'objet mobile (1) se déplace sur la chaussée dans le second état de déplacement.

10. Procédé de commande d'un objet mobile (1) comportant :
la reconnaissance si l'objet mobile (1) se déplace sur une chaussée ou se déplace dans une zone prédéterminée sur la base d'une sortie d'un dispositif de détection externe (10) configuré pour détecter une situation externe de l'objet mobile (1), par un ordinateur pour la commande de l'objet mobile (1) apte à se déplacer à la fois sur la chaussée et dans la zone prédéterminée différente de la chaussée, un ou plusieurs passagers embarquant dans l'objet mobile (1) ;
le fait d'amener, par l'ordinateur, l'objet mobile (1) à se déplacer dans l'un quelconque parmi un premier état de déplacement dans lequel une vitesse de l'objet mobile (1) est limitée à une première vitesse et un second état de déplacement dans lequel la vitesse de l'objet mobile (1) est limitée à une seconde vitesse inférieure à la première vitesse, sur la base d'un type de route reconnu ; [[et]]
le fait d'amener, par l'ordinateur, l'objet mobile (1) à se déplacer dans le second état de déplacement lorsque l'objet mobile (1) se déplace dans la zone prédéterminée, et la réalisation d'une commutation entre le premier état de déplacement et le second état de déplacement en réponse à une instruction concernant l'état de déplacement de l'objet mobile (1) reçue à partir du passager lorsque l'objet mobile (1) est amené à se déplacer de la zone prédéterminée vers la chaussée ;
**caractérisé par**
la détermination, par l'ordinateur, si réaliser une commutation du second état de déplacement vers le premier état de déplacement sur la base d'une opération de direction de l'objet mobile (1) reçue par un opérateur (14) qui reçoit une opération de conduite de l'objet mobile (1) par le passager.

11. Support de stockage ayant un programme stocké dans celui-ci, le programme amenant un ordinateur pour la commande d'un objet mobile (1) apte à se déplacer à la fois sur une chaussée et dans une zone prédéterminée différente de la chaussée, un ou plusieurs passagers embarquant sur l'objet mobile (1), à
reconnaître si l'objet mobile (1) se déplace sur la chaussée ou se déplace dans la région prédéterminée sur la base d'une sortie d'un dispositif de détection externe (10) configuré pour détecter une situation externe de l'objet mobile (1),
amener l'objet mobile (1) à se déplacer dans l'un quelconque parmi un premier état de déplacement dans lequel une vitesse de l'objet mobile (1) est limitée à une première vitesse et un second état de déplacement dans lequel la vitesse de l'objet mobile (1) est limitée à une seconde vitesse inférieure à la première vitesse, sur la base d'un type de route reconnu, [[et]]
amener l'objet mobile (1) à se déplacer dans le second état de déplacement lorsque l'objet mobile (1) se déplace dans la zone prédéterminée, et réaliser une commutation entre le premier état de déplacement et le second état de déplacement en réponse à une instruction concernant l'état de déplacement de l'objet mobile (1) reçue à partir du passager lorsque l'objet mobile (1) est amené à se déplacer de la zone prédéterminée vers la chaussée,
**caractérisé par**
le fait d'amener en outre l'ordinateur à
déterminer si réaliser une commutation du second état de déplacement vers le premier état de déplacement sur la base d'une opération de direction de l'objet mobile (1) reçue par un opérateur (14) qui reçoit une opération de conduite de l'objet mobile (1) par le passager.
